(19) Europäisches Patentamt

European Patent Office

Office européen des brevets

(11) Publication number: **0 227 038**
**A2**

(12) **EUROPEAN PATENT APPLICATION**

(21) Application number: **86117616.2**

(22) Date of filing: **17.12.86**

(51) Int. Cl.4: **G01N 21/71**

(30) Priority: **23.12.85 JP 291758/85**

(43) Date of publication of application:
**01.07.87 Bulletin 87/27**

(84) Designated Contracting States:
**DE GB**

(71) Applicant: **SHIMADZU CORPORATION**
**1, Nishinokyo-Kuwabaracho**
**Nakagyo-ku Kyoto-shi Kyoto 604(JP)**

(72) Inventor: **Sasaki, Kikuo**
**12-99, Kohata Minamiyama**
**Uji Kyoto(JP)**

(74) Representative: **Grupe, Peter, Dipl.-Ing. et al**
**Patentanwaltsbüro**
**Tiedtke-Bühling-Kinne-Grupe-Pellmann-Gra-**
**ms-Struif Bavariaring 4**
**D-8000 München 2(DE)**

(54) Atomic absorption spectrophotometer.

(57) An atomic absorption spectrophotometer, wherein the light source which produces a beam of light having the same emission line spectrum as that of a sample to be analyzed is energized with a relatively large current and alternatively a relatively small current so that the emission line spectrum of the light beam has a greater width and alternatively a smaller width, the ratio between the two currents and consequently the two widths of the emission line being variable in accordance with the concentration of a sample to be measured.

Fig. 1

EP 0 227 038 A2

# ATOMIC ABSORPTION SPECTROPHOTOMETER

## BACKGROUND OF THE INVENTION

This invention relates to an atomic absorption spectrophotometer which is capable of quantitatively measuring samples of not only high but also low concentration with a high degree of precision and accuracy.

In atomic absorption spectrophotometry the sample to be analyzed is atomized by two methods, one of which employs a flame while the other does not. The former will be referred to as the flame method and the latter, as the flameless method. The atomic absorption spectrophotometer to which the invention is applied may employ either of the flame and flameless methods for atomization of the elements contained in the sample.

If the sample to be analyzed is of a high concentration, the amount of the light of a wavelength specific to the element in the sample received by the detector is greatly reduced by absorption in the flame, so that the ratio of dark current and noise to signal at the detector increases and the calibration curve becomes nonlinear, with resulting deterioration of the precision and accuracy in quantitative determination.

To avoid the above-mentioned difficulty, the following measures have been taken:

(1) In the flame method, (a) the sample is diluted to a lower concentration, or (b) the angle of the burner relative to the beam of light from the source is changed.

The method (a) takes much labor and involves errors.

In the method (b) the position of the burner is so changed as to make the surface of its flame aslant relative to the light beam from the source thereby to shorten the distance the light beam travels in the flame. It is dangerous, however, to change the position of the burner while it is burning. In addition, since the sensitivity of the detector is not changed, the shot noise of the detector remains unchanged, with resulting deteriora-of the signal-to-noise ratio.

(2) In the flameless method, (a) the sample is diluted to a lower concentration, or (c) the amount of the sample is reduced.

The method (a) has the same problem as in the flame method.

In the method (c), the amount of light absorbed by a sample under measurement decreases relative to the amount of light absorbed by a blank sample, with resulting deterioration of the signal-to-noise ratio. In addition, the amount of that portion of the sample that soaks into the graphite tube increases relative to the total amount of the sample, with resulting increase in error.

In either the flame or the flameless method, the prior art measures for samples of high concentration involve difficulties in attaining a high degree of precision and accuracy in measurement.

Accordingly, the primary object of the invention is to provide an atomic absorption spectrophotometer which is capable of quantitatively measuring samples of both high and low concentrations with the same high degree of precision and accuracy without taking a troublesome measure such as diluting the sample to a lower concentration.

## SUMMARY OF THE INVENTION

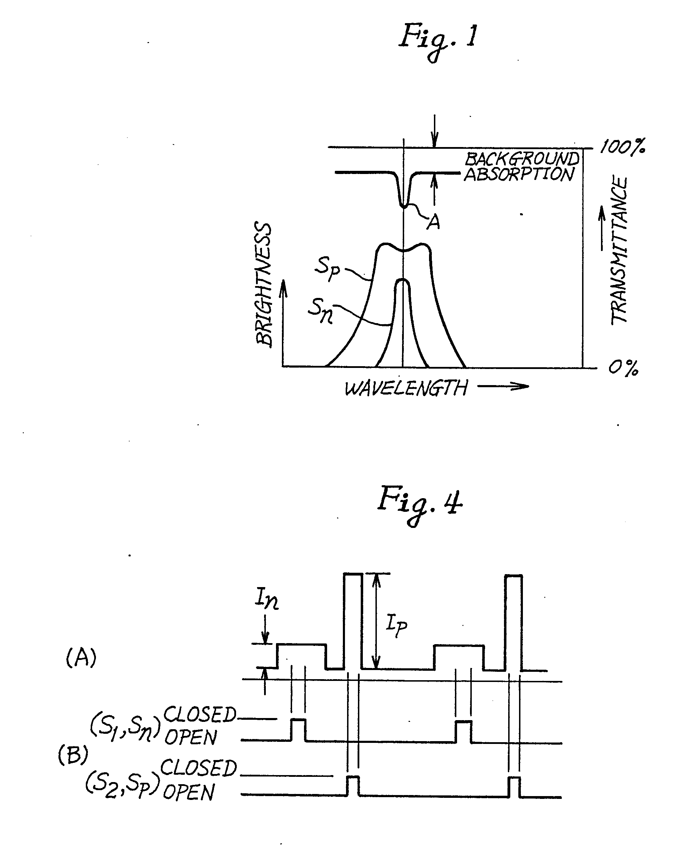

The principle of the invention will be explained with reference to Fig. 1, which shows an absorption spectrum $\underline{A}$ of a sample being measured, and two emission line spectra Sp and Sn of the light beam produced by a hollow-cathode lamp and including the same emission line as that of the element included in the sample. The spectrum Sp is obtained with a large discharge current of the hollow-cathode lamp while the spectrum Sn is obtained with a small discharge current of the lamp. As shown in the graph, the width of the emission line varies with the amount of discharge current of the hollow-cathode lamp.

Suppose that a sample has an absorbance Ap given as:

$$Ap = \beta A + BG \bullet\bullet\bullet (1)$$

when the beam of light produced by the lamp has the emission line spectrum Sp, and an absorbance An given as:

$$An = \alpha A + BG \bullet\bullet\bullet (2)$$

when the light beam produced by the lamp has the emission line spectrum Sn.

In the above two expressions the term BG is a constant caused by background absorption, which remains unchanged in either of the two conditions of the lamp, and $\underline{A}$ is an absorbance of the sample when the emission line is of a sufficiently narrow width.

The absorbance $\underline{A}$ can be obtained by subtracting the expression (1) from the expression (2) to cancel the background absorption as follows:

$$An - Ap = (\alpha - \beta) A \bullet\bullet\bullet (3).$$

where $(\alpha - \beta)$ is a sensitivity indicating the rate at which the absorbance $\underline{A}$ is magnified or reduced.

In the spectrophotometer of the invention, the sensitivity ( $\alpha-\beta$ ) is changed in accordance with the concentration of a sample to be measured. The coefficients $\alpha$ and $\beta$ are physically the same, and $\alpha = 1$ when the width of the emission line is rendered sufficiently narrow while $\beta = 0$ when the width is rendered sufficiently wide, so that the value ( $\alpha-\beta$ ) is variable within a range of 0 to 1.

In accordance with the invention, the width of the emission line of the spectrum Sn is broadened so as to obtain substantially the same result of measurement as if the sample was diluted.

## BRIEF DESCRIPTION OF THE DRAWING

Fig. 1 shows two emission line spectra of different widths of a light source and an absorption spectrum of a sample for explanation of the principle of the invention;

Fig. 2 is a block diagram of one embodiment of the invention;

Fig. 3 shows the details of the controller of the hollow-cathode lamp shown in Fig. 2; and

Fig. 4 is a time chart for explanation of the operation of the apparatus shown in Fig. 2.

## DESCRIPTION OF A PREFERRED EMBODIMENT

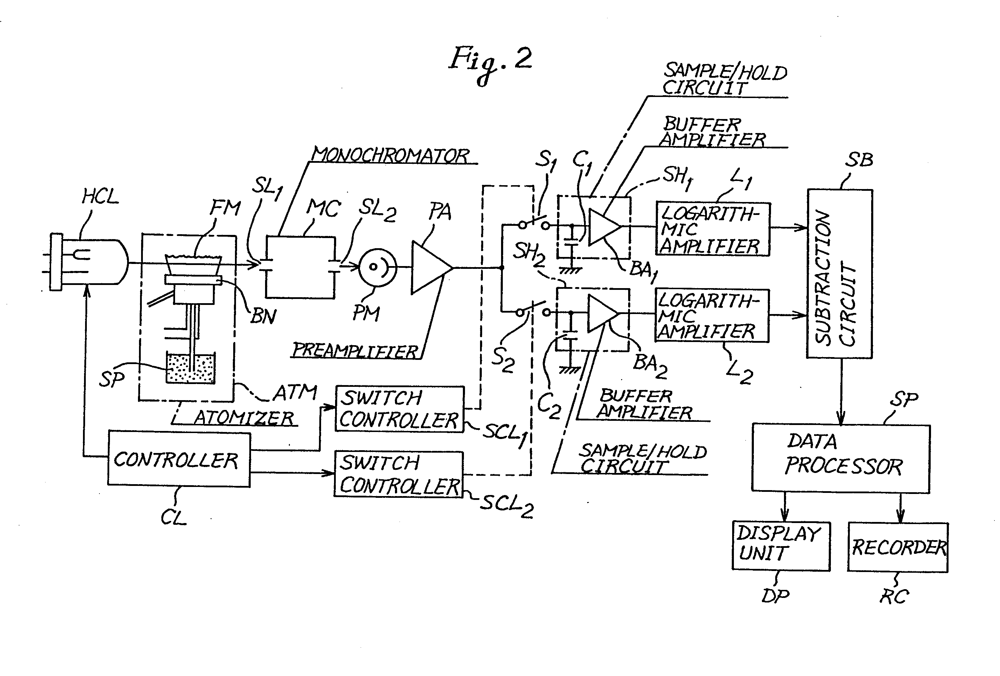

Turning now to Fig. 2, there is schematically shown one embodiment of the invention which comprises a source of light HCL, an atomizer ATM, a monochromator MC and a photodetector PM. The light source HCL comprises a hollow-cathode lamp which gives a sharp emission line or lines of a specific element to be measured. The atomizer ATM includes a burner BN which produces a flame FM for atomizing a sample SP to be measured. The monochromator MC includes an entrance slit $SL_1$, an exit slit $SL_2$, and optical elements including a light dispersing element, not shown.

The photodetector PM comprises a photomultiplier tube which converts the monochromatic light from the monochromator MC to a corresponding electrical signal. A preamplifier PA receives the signal and produces an output to be applied alternatively through sampling switches $S_1$ and $S_2$ to sample/hold circuits $SH_1$ and $SH_2$, respectively.

The circuit $SH_1$ comprises a capacitor $C_1$ and a buffer amplifier $BA_1$, and the circuit $SH_2$ comprises a capacitor $C_2$ and a buffer amplifier $BA_2$. Each of a pair of logarithmic amplifiers $L_1$ and $L_2$ converts the output from the corresponding one of the sample/hold circuits $SH_1$ and $SH_2$ to an absorbance signal.

The outputs from the logarithmic amplifiers $L_1$ and $L_2$ are applied to a subtraction circuit SB, which subtracts one from the other of the outputs from the logarithmic amplifiers $L_1$ and $L_2$. A data processor SP processes the data obtained by the measurement.

A controller CL controls energization of the hollow-cathode lamp with an electric current having the waveform shown in Fig. 4(A). The lower level In of the current is variable up to the maximum level Ip in accordance with the concentration of the sample.

The controller also controls the switches $S_1$ and $S_2$ so that they are alternatively closed in accordance with the time chart shown in Fig. 4(B).

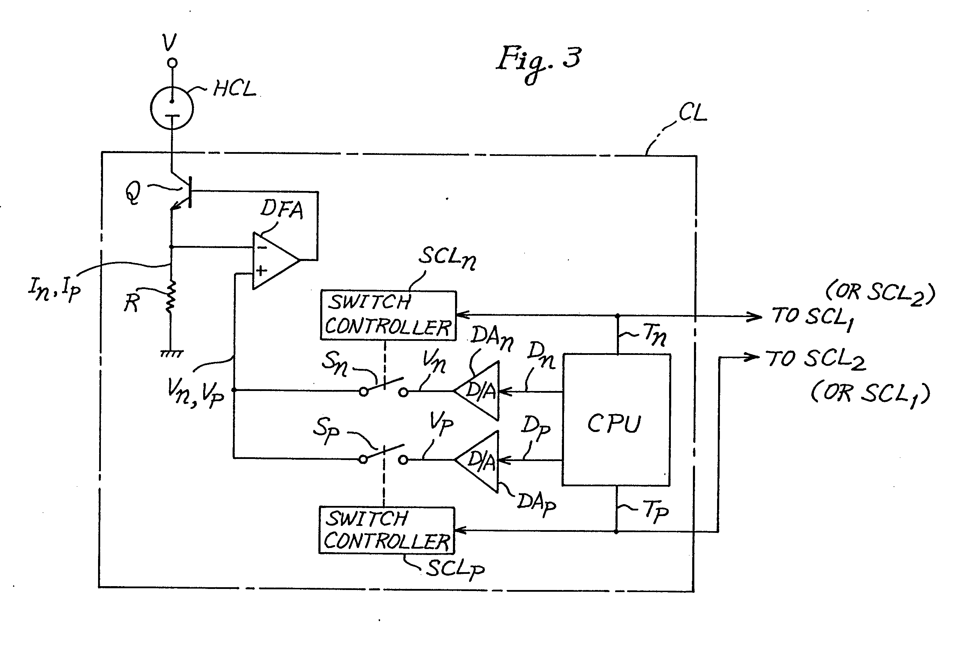

Fig. 3 shows by way of example the details of the controller CL. The hollow-cathode lamp HCL is connected between a voltage source $\underline{V}$ and the collector of a transistor $\underline{Q}$ whose emitter is connected to one end of a resistor $\underline{R}$ grounded at the other end. A differential amplifier DFA has its negative input terminal connected between the transistor $\underline{Q}$ and the resistor $\underline{R}$ and its positive input terminal connected to the output terminals of a pair of digital-to-analog converters DAn and DAp via switches Sn and Sp, respectively. The amplifier DFA has its output terminal connected to the base of the transistor $\underline{Q}$.

A central processing unit CPU provides digital signals Dn and Dp to be applied to the D/A converters DAn and DAp, respectively, so that they produce voltages Vn and Vp of different levels as determined by the input signals Dn and Dp. The CPU also provides timing signals Tn and Tp to be applied to switch controllers SCLn and SCLp, respectively.

When the switch Sn is closed, the voltage Vn is applied to the positive input terminal of the differential amplifier DFA, and when the other switch Sp is closed, the voltage Vp is applied to the positive input terminal of the same amplifier. As a result, a current In ( $=$ Vn/R) or Ip ( $=$ Vp/R) such as to cause a voltage of the same level as Vn or Vp to be applied to the negative input terminal of the differential amplifier DFA flows through the resistor $\underline{R}$ and the hollow-cathode lamp HCL. As previously mentioned, when the lamp HCL is energized with the current In of the lower level, it produces a light beam having an emission line spectrum of a narrow width, and when the lamp is energized with the current Ip of the higher level, the width of the emission line spectrum of the light beam produced by the lamp HCL is widened.

The timing signals Tn and Tp are also applied to the switch controllers $SCL_1$ and $SCL_2$, respectively, so that the switches $S_1$ and $S_2$ are alternatively closed in synchronism with the switches Sn and Sp, respectively. When, with the switch $S_2$

being opened, the switch $S_1$ is temporarily closed within the period of time for which the hollow-cathode lamp HCL is supplied with the current In to produce a beam of light having an emission line spectrum Sn of a small width, the output from the logarithmic amplifier $L_1$ corresponding to the previously mentioned expression An = $\alpha$A + BG is applied to the subtraction circuit SB. When, with the switch $S_1$ having been opened, the switch $S_2$ is temporarily closed while the lamp is supplied with the current Ip so that the width of the emission line spectrum is widened to Sp, the output from the logarithmic amplifier $L_2$ corresponding to the previously mentioned expression An = $\beta$A + BG is applied to the subtraction circuit SB, which performs an operation in accordance with the previously mentioned expression:
An -Ap = $(\alpha-\beta)$ A.

The result of the subtraction is displayed on a display unit DP and/or recorded by a recorder RC via the data processor SP.

In accordance with the invention, the coefficient ( $\alpha-\beta$ ) is changed in accordance with the concentration of a sample to be measured. The coefficient can be changed by changing either or both of the energizing current In and Ip applied to the hollow-cathode lamp HCL and is determined, for example, in the following manner:

Initially, the lower current In is set to a certain value in anticipation of the range of the concentrations of different samples expected to be analyzed. Then with a standard sample of a known concentration, the current In is adjusted to such a value that the indication at the display unit DP conforms to the known concentration of the standard sample being measured.

The value of the current In to be set in accordance with the concentration of a sample to be measured depends upon the kind of the sample and cannot be determined in general. Therefore, the relations between the concentrations of various kinds of samples and the current values suitable for the concentrations are experimentally determined beforehand. Generally, the higher the concentration and consequently the greater the absorption is, the higher level the current In is set to.

In absorption spectrophotometry, when a sample absorbs a large amount of light, the ratio of the dark current and noise to signal in the output of the measuring circuit increases, with resulting increase in the nonlinearity of the calibration curve and deterioration of the precision and accuracy in measurement. In accordance with the invention, however, even when a sample in the range of high concentration is to be measured, the signal-to-noise ratio can be improved by increasing the current In applied to the hollow-cathode lamp thereby to improve the linearity of the relation between the concentration of the sample and the output of the measuring circuit. This eliminates the necessity of correction and the errors which would otherwise be involved therein, and enables measurement with a high degree of accuracy and precision. In addition, the apparatus of the invention can save the trouble of diluting the sample to a lower concentration and consequently avoid those errors which would be caused by the process of diluting the sample. In the flameless method, reduction of the amount of the sample increases the relative amount of the sample that soaks into the graphite tube in the atomizer with resulting introduction of errors into the result of measure ment. The apparatus of the invention has no such indefinite factor but enables measurement of samples of high concentration by simple operation and with a high degree of accuracy and precision, and with automatic correction of errors caused by background absorption.

## Claims

1. An atomic absorption spectrophotometer comprising:

a) a light source for producing a beam of light having the same emission line spectrum as that of a sample to be analyzed;

b) control means for effecting energization of said light source with a current of a first level and alternatively with a current of a second level different from said first level thereby to cause said emission line spectrum to alternatively have a first and a second width, said control means including means for changing the ratio between said first and second current levels in accordance with the concentration of said sample;

c) an atomizer for atomizing said sample, said atomizer being so arranged that said light beam passes through said atomized sample;

d) a monochromator for dispersing said light beam that has passed through said atomized sample into series of wavelengths and providing a monochromatic light of a selected one of said series of wavelengths; and

e) light measuring means for measuring the intensity of said monochromatic light when said emission line spectrum has said first width and alternatively when said emission line spectrum has said second width and producing an electrical signal corresponding to the absorbance of said sample.

2. The atomic absorption spectrophotometer of claim 1, wherein said light source is a hollow-cathode lamp.

3. The atomic absorption spectrophotometer of claim 2, wherein said control means comprises;

a) voltage source connected to said hollow-cathode lamp;

b) a transistor having its collector connected to said hollow-cathode lamp;

c) a resistor having one end connected to the emitter of said transistor and the opposite end grounded;

d) a differential amplifier having a negative input terminal connected between said resistor and said transistor and a positive input terminal and an output terminal connected to said transistor;

e) a first digital-to-analog converter having an output terminal connected to said positive input terminal of said differential amplifier;

f) a second digital-to-analog converter having an output terminal connected to said positive input terminal of said differential amplifier;

g) a first switch connected between said first digital-to-analog converter and said positive input terminal of said differential amplifier;

h) a second switch connected between said second digital-to-analog converter and said positive input terminal of said differential amplifier;

i) a first switch controller for controlling the operation of said first switch;

j) a second switch controller for controlling the operation of said second switch; and

k) a microcomputer for providing a first and a second digital signal to be applied to said first and second digital-to-analog converters, respectively, so that said first and second digidital-to-analog converters produce a voltage of a first and a second level, respectively, and a first and a second timing signal to be applied to said first and second switch controllers, respectively, so that said first and second switches are alternatively closed temporarily thereby to cause said first and second voltages alternatively to be applied to said positive input terminal of said differential amplifier, so that a current of a first and a second level alternatively flows through said hollow-cathode lamp.

4. The atomic absorption spectrophotometer of claim 3, wherein said microcomputer is capable of varying said first and second digital signals individually thereby to change said first and second output voltage levels of said first and second digital-to-analog converters and consequently said first and second current levels.

5. The atomic absorption spectrophotometer of claim 1, wherein said light measuring means comprises:

a) a photomultiplier tube for receiving said monochromatic light from said monochromator to produce an electrical signal corresponding to the intensity of said monochromatic light;

b) a preamplifier for amplifying said electrical signal;

c) a first sample/hold circuit connected to the output terminal of said preamplifier;

d) a second sample/hold circuit connected to the output terminal of said preamplifier in parallel with said first sample/hold circuit;

e) a first logarithmic amplifier connected to the output terminal of said first sample/hold circuit;

f) a second logarithmic amplifier connected to the output terminal of said second sample/hold circuit;

g) a subtracting circuit connected to the output terminals of said first and second logarithmic amplifiers to produce a signal corresponding to the difference between the outputs of said first and second logarithmic amplifiers;

h) a first switch connected between the output terminal of said preamplifier and said first sample/hold circuit;

i) a second switch connected between the output terminal of said preamplifier and said second sample/hold circuit;

j) a first switch controller operable in response to energization of said light source with said current of said first level to control the opration of said first switch; and

k) a second switch controller operable in response to energization of said light source with said current of said level to control the operation of said second switch.

6. The atomic absorption spectrophotometer of claim 5, further including a data processor for processing the output signal from said subtracting circuit to provide predetermined processed data concerning the absorbance of said sample, a display unit for displaying said processed data and a recorder for recording said processed data.

7. The atomic absorption spectrophotometer of claim 6, wherein said processed data comprise are the averaged absorbance of said sample, the peak value of said absorbance, and the concentration of said sample.

8. The atomic absorption spectrophotometer of claim 3, wherein said light measuring means comprises:

a) a photomultiplier tube for receiving said monochromatic light from said monochromator to produce an electrical signal corresponding to the intensity of said monochromatic light;

b) a preamplifier for amplifying said electrical signal;

c) a first sample/hold circuit connected to the output terminal of said preamplifier;

d) a second sample/hold circuit connected to the output terminal of said preamplifier in parallel with said first sample/hold circuit;

e) a first logarithmic amplifier connected to the output terminal of said first sample/hold circuit;

f) a second logarithmic amplifier connected to the output terminal of said second sample/hold circuit;

g) a subtracting circuit connected to the output terminals of said first and second logarithimic amplifiers to produce a signal corresponding to the difference between the outputs of said first and second logarithmic amplifiers;

h) a third switch connected between the output terminal of said preamplifier and said first sample/hold circuit;

i) a fourth switch connected between the output of said preamplifier and said second sample/hold circuit;

j) a third switch controller operable in response to said first timing signal from said microcomputer to control the operation of said third switch in synchronism with the operation of said first switch; and

k) a fourth switch controller operable in response to said second timing signal from said microcomputer to control the operation of said fourth switch in synchronism with the operation of said second switch.

Fig. 1

Fig. 4

Fig. 2

SAMPLE/HOLD CIRCUIT

BUFFER AMPLIFIER

MONOCHROMATOR

PREAMPLIFIER

ATOMIZER

CONTROLLER

SWITCH CONTROLLER

SWITCH CONTROLLER

LOGARITH- MIC AMPLIFIER

LOGARITH- MIC AMPLIFIER

SUBTRACTION CIRCUIT

BUFFER AMPLIFIER

SAMPLE/HOLD CIRCUIT

DATA PROCESSOR

DISPLAY UNIT

RECORDER

0 227 038

*Fig. 3*

0 227 038